# EUROPEAN PATENT APPLICATION

(11) **EP 1 039 407 A1**
(43) Date of publication of application: **27.09.2000**
(21) Application number: 00400811.6
(22) Date of filing: 23.03.2000
(51) Int. Cl.: G06K 7/00

(54) **Connector for double chip card readers allowing to accomodate two chips cards individually**

(30) Priority: 26.03.1999 FR 9903834
(71) Applicant: FRAMATOME CONNECTORS INTERNATIONAL, 92400 Courbevoie (FR)
(72) Inventor: Pernet, Michel, 25300 Doubs (FR)
(74) Representative: Somnier, Jean-Louis

(57) **Abstract**

The connector comprises two reading frames (1,2) each having contacts (3,4) for establishing, on the one hand, electric connections with the card chip and for being connected, on the other hand, to a printed circuit board (5), each reading frame having a cover thereon (6).

The reading frames (1,2) and the cover (6) form, upon assembly thereof, a one-piece unit, wherein the reading frames are offset in the direction of their width (F) and in a direction perpendicular (D) to their plane.

## Description

The present invention relates to connectors for smart card readers, and particularly a new concept of a connector for double smart card readers.

A new need is currently felt of applications wherein two smart cards are simultaneously used in the same device.

The direct application of such a device relates to TV decoders, wherein a first card is used to identify a subscriber and a second card is used to identify and validate payment, for instance by means of a bank card, in order to be allowed to access a pay-per-view program.

Further applications relate to the use of smart cards for validating the access to a car radio. Also, applications are being developed for reading cards "upside-down" or for devices meant for the use of reversed connectors.

In such applications, in addition to the solidity and rigidity of the device, compactness is of the utmost importance, the constant trend being miniaturization.

Hence, it is an object of the present invention to provide a connector for a double chip card reader which is as small as possible and can be electrically connected to a single printed circuit board.

Thus, the invention provides a connector for a double chip card reader allowing to accommodate two chip cards individually, which comprises two reading frames each having contacts for establishing, on the one hand, electric connections with the card chip and for being connected, on the other hand, to a printed circuit board, each reading frame having a cover.

According to the invention, this connector is characterized in that the reading frames and the covers form, upon assembly thereof, a one-piece unit, wherein the reading frames are offset in the direction of their width and in a direction perpendicular to their plane.

Thanks to the above described offset, the double reader connector according to the invention is narrower than the two reading frames when disposed one as an extension of the other.

Moreover, this arrangement allows material savings, without affecting the rigidity of the double connector unit.

Further, this arrangement is compatible with the connection of the connector with a single printed circuit board.

In accordance with a preferred embodiment of the invention, the two reading frames have each fastening pins and contacts projecting in a direction opposite to the cover of each frame, the pins and contacts of one frame being longer than the pins and contacts of the other frame, so that the ends of the pins and contacts of the two frames are all comprised in the same plane, parallel to the plane of each frame.

The ends of the pins and contacts as described above can thus be readily fastened and connected to a single printed circuit board.

Further characteristics and advantages of the invention will be also apparent from the following description.

In the accompanying drawings provided by way of non-limiting example:
figure 1 is a front view of a first embodiment of a connector according to the invention;
figure 2 is a bottom plan view of the connector as shown in figure 1;
figure 3 is a side view of the connector as shown in figure 1;
figure 4 is a front view of a second embodiment of the connector according to the invention;
figure 5 is a bottom view of the connector as shown in figure 4;
figure 6 is a front view of a third embodiment of the connector according to the invention.

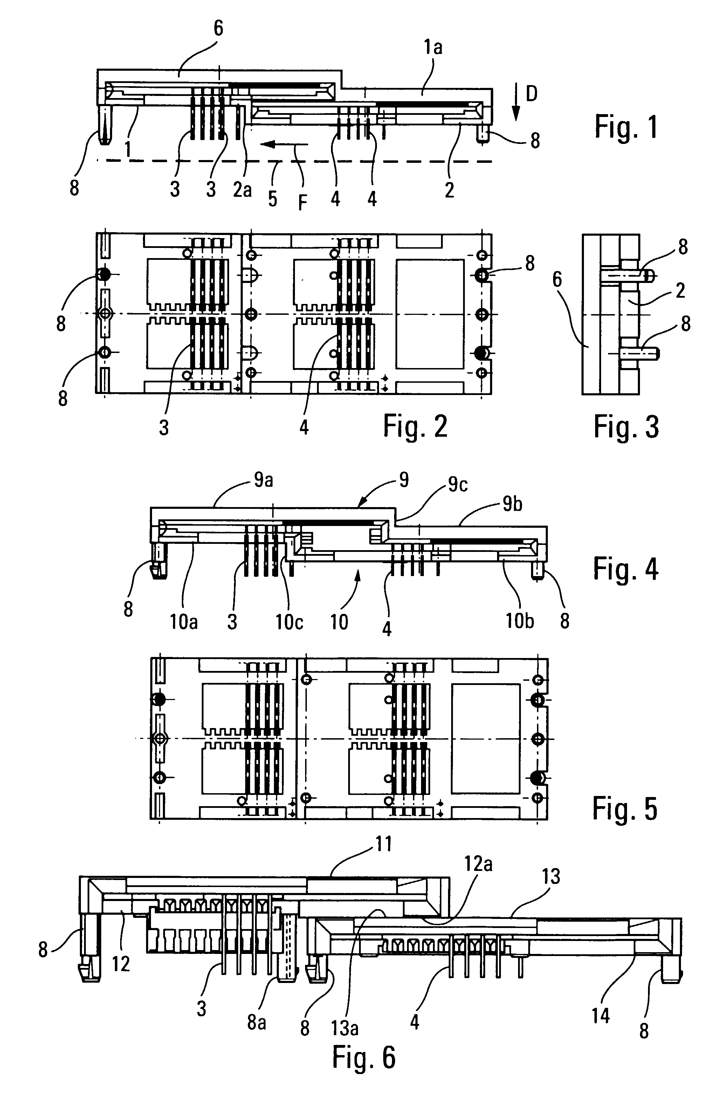

In the embodiment of figure 1, the double chip card reader allowing to accommodate two chip card individually, comprises two reading frames 1, 2 each having contacts 3, 4 for establishing, on the one hand, electric connections with the card chip and for being connected, on the other hand, to a printed circuit board 5.

The reading frame is extended by a portion 1b, which forms the cover of the reading frame 2, a single piece thereby forming the reading frame 1 and the cover of the reading frame 2. The reading frame 1 is covered, in turn, with a cover 6.

In accordance with the invention, the two reading frames 1, 2 and the cover 6 form, upon assembly thereof, a one-piece unit, wherein the two reading frames 1, 2 are offset in the direction F of their width and in a direction D perpendicular to their plane.

This offset reduces the width of the connector.

Also, the two reading frames 1, 2 have each fastening pins 8 and contacts 3, 4 projecting in a direction opposite to the cover 6, la of each frame 1, 2, the pins and contacts 3 of the frame 1 being longer than the pins 8 and contacts 4 of the other frame 2, so that the ends of the pins 8 and contacts 3, 4 of the two frames 1, 2 are all comprised in the same plane, parallel to the plane of each frame 1, 2. This arrangement helps to effectively fasten the pins 8 and connect the contacts 3, 4 to the printed circuit board 5.

In the embodiment shown in figure 1, the cover 6 of the reading frame 1 and the other reading frame 2 are identical to standard covers and reading frames for single card connectors.

The cover 6 and said other frame 2 are joined together by an intermediate part 1 which forms the reading frame 1 associated to the cover 6 and to the cover 1b for said other frame 2.

The connector thus consists of three parts forming a rigid and compact unit.

However, figure 1 shows that the reading frame 2, unlike standard frames, has no fastening pins on its edge 2a closest to the center of the connector.

In the embodiment as shown in figures 4 and 5, the connector consists of two superposed parts 9, 10.

The first part 9 comprises a first portion 9a, which forms the cover of one 10a of the reading frames.

Such first portion 9a has the same width as standard covers.

The second portion 9b of the part 9 forms a portion of the cover of the other reading frame 10b.

Such second portion 9b is connected to the first portion 9a by a shoulder 9c and has a smaller width than the first portion 9a.

The second part 10 comprises a first portion 10a, which forms the reading frame associated to the cover formed by the first portion 9a of the first part 9.

Such second part 10 comprises a second portion 10b, which forms the reading frame connected to the first portion 10a, which forms a reading frame, by a shoulder 10c.

In the third embodiment as shown in figure 6, the connector comprises a first cover 11 of the standard type associated to a first reading frame 12 of the standard type and a second cover 13 of the standard type associated to a second reading frame 14, also of the standard type.

The lower face 12a of the first reading frame 12 is fastened onto the upper face 13 of the second cover 13, so that its faces 12a, 13a partially overlap.

In the case of the unit consisting of the cover 13 and of the frame 14, the fastening pins near the edges are in a standard arrangement.

Conversely, in the case of the first reading frame 12, the fastening pins 8a are fastened near the center of the lower face of the frame.

The different parts of the connectors described above are made of plastic and joined together by ultrasonic plastic welding, or by clip fastening.

Obviously, the invention is not limited to the above described example and may be greatly varied without departure scope of the invention.

## Claims

1. A connector for a double chip card reader allowing to accommodate two chip cards individually, which comprises two reading frames (1, 2; 10a, 10b; 12, 14) each having contacts (3, 4) for establishing, on the one hand, electric connections with the card chip accommodated thereby and for being connected, on the other hand, to a printed circuit board (5), each reading frame having a cover (6, 1a; 9a, 9b; 11, 13), characterized in that the reading frames (1, 2; 10a, 10b; 12, 14) and the covers (6, 1a; 9a, 9b; 11, 13) form, upon assembly thereof, a one-piece unit, wherein the reading frames are offset in the direction of their width (F) and in a direction (D) perpendicular to their plane.

2. A connector as claimed in claim 1, characterized in that the two reading frames (1, 2; 10a, 10b; 12, 14) have each fastening pins (8) and contacts (3, 4) projecting in a direction opposite to the cover of each frame, the pins (8) and contacts (3) of one frame (1, 10a, 12) being longer than the pins (8) and contacts (4) of the other frame (2, 10b, 14), so that the ends of the pins (8) and contacts (3, 4) of the two frames are all comprised in the same plane, parallel to the plane of each frame.

3. A connector as claimed in any one of claims 1 or 2, characterized in that the cover (6) of one of the reading frames and the other reading frame (2) are identical to the cover and to the standard frame respectively of a connector for a single card, said cover (6) and said other frame (2) being joined together by an intermediate part (1, 7) which forms the reading frame (1) associated to said cover (6) and to the cover (7) of said other frame (2).

4. A connector as claimed in claim 3, characterized in that said other reading frame (2) has no fastening pins on its edge (2a) closest to the center of the connector.

5. A connector as claimed in any one of claims 1 or 2, characterized in that it consists of two superposed parts (9, 10) the first of these parts comprising a first portion (9a), which forms the cover of one (10a) of the reading frames and having the same width as standard covers and a second portion (9b) which forms the cover of the other reading frame (10b), connected to the first portion (9a) by a shoulder (9c) and having a smaller width than the first portion (9a), the second part (10) comprising a first portion (10a), which forms the reading frame associated to the cover (9a) formed by the first portion of the first part (9), and a second portion (10b), which forms the reading frame connected to the first portion (10a), which forms a reading frame, by a shoulder (10c).

6. A connector as claimed in any one of claims 1 or 2, characterized in that it comprises a first cover (11) of the standard type associated to a first reading frame (12) of the standard type and a second cover (13) of the standard type associated to a second reading frame (14), also of the standard type, the lower face (12a) of the first reading frame (12) being fastened onto the upper face (13a) of the second cover (13), said faces (12a, 13a) overlapping party.

7. A connector as claimed in claim 6, characterized in that the lower face of the first reading frame (12) holds fastening pins (8a) near its center.

8. A connector as claimed in any one of claims 1 to 7, characterized in that the different parts are made of plastic and are joined together by ultrasonic plastic welding.
